# EUROPEAN PATENT APPLICATION

(11) **EP 3 574 753 A1**
(43) Date of publication of application: **04.12.2019**
(21) Application number: 18174557.1
(22) Date of filing: 28.05.2018
(51) Int. Cl.: A01K 63/04, C01B 13/02

(54) **DEVICE AND METHOD FOR OXYGENATING AN AQUACULTURE POND**

(71) Applicant: Evonik Degussa GmbH, 45128 Essen (DE)
(72) Inventor: BOLZ, David, 60594 Frankfurt (DE); KÖNIG, Bernhard, 63594 Hasselroth (DE); NEUMAYER, Stephan, 60320 Frankfurt (DE)

(57) **Abstract**

A device for oxygenating an aquaculture pond comprises a water recirculation conduit (2) and a hydrogen peroxide dosing unit (3) connected thereto. The recirculation conduit comprises a water intake (4) for withdrawing water from the pond (1), a recirculation pump (5) downstream of the water intake and a distribution conduit (6) having a multitude of liquid outlets (7), arranged downstream of the recirculation pump and submergible in the pond at a fixed height of from 5 to 50 cm above the bottom of the pond. The hydrogen peroxide dosing unit is connected to the recirculation conduit upstream of the distribution conduit. An aquaculture pond is oxygenated by recirculating pond water with the device, adding hydrogen peroxide from the hydrogen peroxide dosing unit.

## Description

### Field of the invention

The invention relates to a device and a method for oxygenating an aquaculture pond which provide sufficient levels of dissolved oxygen near the bottom of the pond and prevent suspending particles from the bottom pond and irritating animals living at or close to the bottom of the pond.

### Background of the invention

When fish or shrimp are raised in aquaculture ponds in high intensity aquaculture, the transport of oxygen from the pond surface to the pond bottom by diffusion and natural circulation may be slower than oxygen consumption by the raised species and by microorganisms living in the pond water and the pond sediment. This may lead to low levels of dissolved oxygen in the water close to the bottom of the pond which may harm the raised species and impedes their growth. Low levels of dissolved oxygen at the bottom of the pond may also lead to anaerobic conditions in the pond sediment, causing formation of hydrogen sulfide which is toxic to the raised species. Therefore, there is a need for oxygenating aquaculture ponds.

Oxygenation of aquaculture ponds is typically carried out with paddle wheels mounted on floats. However, oxygenation with paddle wheels is noisy and inefficient and may not provide a sufficient concentration of dissolved oxygen near the pond bottom.

US 6,155,794 proposes to use an aspirating aerator fixed at a middle or lower level of the pond, mixing air and water with a submerged pump and ejecting the mixture at a high flow rate. However, a strong water flow with entrained air bubbles will cause irritation of fish and shrimp living close to the pond bottom and will adversely affect water quality by suspending sediment from the bottom.

CN 103 420 525 A proposes to introduce compressed air through a plurality of aeration pipes disposed at the bottom of an aquaculture pond in combination with what is described as a quantum new energy emission device. However, introducing air bubbles at the bottom of the pond will cause the same problems of irritating fish and shrimp living close to the pond bottom and suspending sediment from the bottom.

EP 2 198 704 proposes oxygenating in aquaculture with pure oxygen, dissolving the oxygen with a Venturi dissolver in a submersible unit. However, this method not only requires a supply of pure oxygen, but also a large water flow due to the low solubility of oxygen in water. Therefore, the same problems as described above will occur when this method is used in shrimp aquaculture.

CN 1 079 355 A proposes adding hydrogen peroxide to a shrimp pond by spraying as an emergency measure when the cultured shrimp are harmed by low levels of dissolved oxygen or hydrogen sulfide formation in the pond.

### Summary of the invention

The inventors of the present invention have now devised a device for oxygenating an aquaculture pond with hydrogen peroxide, where hydrogen peroxide is dosed into a recirculating water stream, which prevents hydrogen peroxide concentrations in the aquaculture pond that may harm the species raised in the aquaculture, and where the water with added hydrogen peroxide is distributed in the aquaculture pond with a distribution conduit having a multitude of liquid outlets, submerged in the aquaculture pond at a specific height above the bottom, which prevents suspending particles from the bottom pond and irritating animals living at or close to the bottom of the pond, such as shrimps or ground feeding fish.

Subject of the invention is therefore a device for oxygenating an aquaculture pond, the device comprising a water recirculation conduit and a hydrogen peroxide dosing unit connected to the recirculation conduit, wherein the recirculation conduit comprises a water intake for withdrawing water from the pond, a recirculation pump downstream of said water intake and at least one distribution conduit having a multitude of liquid outlets, arranged downstream of said recirculation pump and submergible in the aquaculture pond at a height of from 5 to 50 cm above the bottom of the aquaculture pond, the hydrogen peroxide dosing unit being connected to the recirculation conduit upstream of said distribution conduit by a hydrogen peroxide inlet.

A further subject of the invention is a method for oxygenating an aquaculture pond, comprising recirculating pond water with the device of the invention, adding hydrogen peroxide from the hydrogen peroxide dosing unit of the device.

### Brief description of drawings

Fig. 1 shows a preferred example of the device of the invention, where the recirculation pump (5), the hydrogen peroxide inlet (8) and a controller (12) are mounted on a pump skid (18) and the hydrogen peroxide dosing unit (3) is in the form of a mobile rack.
Fig. 2a and 2b show a preferred embodiment of a distribution conduit (6) made from an elastic material where the liquid outlets (7) are closable nozzles (9) provided by slits in the elastic material.

### Detailed description of the invention

The device of the invention for oxygenating an aquaculture pond comprises a water recirculation conduit and a hydrogen peroxide dosing unit connected to the recirculation conduit. The recirculation conduit comprises a water intake for withdrawing water from the pond, a recirculation pump downstream of said water intake and at least one distribution conduit having a multitude of liquid outlets, arranged downstream of said recirculation pump and submergible in the aquaculture pond at a height of from 5 to 50 cm, preferably from 10 to 40 cm, above the bottom of the aquaculture pond.

The water recirculation conduit of the inventive device may comprise a single water intake or a multitude of water intakes, with a single intake being preferred. The water intake of the recirculation conduit is preferably attached to a mount which keeps the water intake submerged below the water surface of the aquaculture pond, preferably close to the water surface at a distance less than 30 cm below the water surface. The mount for the water intake may comprise a fixture for fixing it to the ground or to a side of the aquaculture pond. Alternatively, the mount for the water intake may be attached to a float to keep the water intake submerged at the desired distance to the water surface.

The water intake preferably comprises a strainer which retains particulate matter and prevents suspended particles from entering the water recirculation conduit. The strainer preferably comprises a sieve which may be made from metal, such as stainless steel, or from a polymeric material, such as polyethylene, polypropylene or another water-insoluble polymer. Alternatively, the strainer may comprise a porous filter material which retains particles, such as a porous disc or a porous sleeve, or it may comprise a filter cloth, which may be made from a woven or a nonwoven material. The strainer is preferably removable and replaceable in order to be able to clean the strainer while continuing use of the device of the invention with a replacement strainer. Alternatively, the strainer may comprise a replaceable sieve, porous filter or filter cloth. The device of the invention may additionally comprise a device for backflushing the strainer with water in order to remove particulate matter which has collected on the strainer. The device of the invention may also comprise a device for detecting or measuring water flow between the strainer and the recirculation pump or for detecting or measuring pressure between the strainer and the recirculation pump in order to detect clogging of the strainer. This detecting or measuring device may trigger a warning and optionally an alarm to the operator of the inventive device to signal the need for cleaning or replacing the strainer or a filter element of the strainer. If a device for backflushing the strainer is installed, the device for detecting or measuring water flow may comprise a control unit for initiating backflush of the strainer.

The water recirculation conduit comprises a recirculation pump downstream of the water intake. Any pump suitable for pumping water at the desired water flow and providing the pressure needed to achieve the desired water flow through the liquid outlets of the distribution conduit(s) may be used. Preferably, an electrically driven pump is used. Centrifugal pumps are preferred to prevent build-up of high pressure downstream of the pump if the distribution conduit(s) downstream of the recirculation pump get(s) clogged. The recirculation pump may be a submergible pump and may be placed at the bottom of the aquaculture pond. Alternatively, the recirculation pump may be attached to a float for placing it at the surface of the aquaculture pond. Preferably, the recirculation pump is placed outside the aquaculture pond and preferably comprises a fixture for placing the recirculation pump onto the ground or above the ground beside the aquaculture pond.

The device of the invention may also comprise a device for detecting or measuring water flow between the recirculation pump and the distribution conduit(s) or for detecting or measuring pressure between the recirculation pump and the distribution conduit(s) in order to detect clogging of the distribution conduit(s) or the liquid outlets of the distribution conduit(s), malfunction of the recirculation pump and/or a leakage in a conduit between the recirculation pump and the distribution conduit(s). This detecting or measuring device may trigger a warning and optionally an alarm to the operator of the inventive device to signal clogging of the distribution conduit(s) or the liquid outlets of the distribution conduit(s), malfunction of the recirculation pump and/or a leakage in a conduit between the recirculation pump and the distribution conduit(s). In a preferred embodiment, a device for measuring water flow is arranged between the recirculation pump and the distribution conduit(s) and is connected to a controller which controls the operating rate of the recirculation pump in order to maintain a constant water flow.

The water recirculation conduit further comprises at least one distribution conduit arranged downstream of the recirculation pump. The device of the invention may comprise a single distribution conduit or may preferably comprise a multitude of distribution conduits. The at least one distribution conduit preferably has a tubular shape and may be a tube made from a rigid material, such as metal or a rigid polymer, or may be a tube made from a flexible material, such as a flexible polymer tube. In a preferred embodiment, the at least one distribution conduit is made from an elastic polymer, such as natural or synthetic rubber or plasticized polyvinylchloride, and may be a hose made from an elastic material. The at least one distribution conduit may be connected to the recirculation pump by a connecting conduit made from a different material. When a multitude of distribution conduits is used, each distribution conduit is preferably connected to the connecting conduit through a manifold.

The at least one distribution conduit has a multitude of liquid outlets. The liquid outlets may be permanent openings in the distribution conduit, such as holes or slits in the conduit wall. Preferably, the liquid outlets comprise closable nozzles which are in a closed state when the pressure inside the distribution conduit is the same or lower than the pressure of a medium surrounding the distribution conduit and change to an open state at a pressure inside the distribution conduit higher than the pressure of the medium surrounding the distribution conduit, and most preferably, all liquid outlets are such closable nozzles. The closable nozzles may be openings in the conduit wall with a separate closure covering the opening. This closure may be attached to the conduit through an elastic member, such as a spring, which forces the closure upon the opening when the pressure inside the distribution conduit is low and allows for the closure to be pushed away by liquid exiting the opening. Alternatively, the closure may be arranged in the cage of a floating valve, where the closure has a density higher than water if the opening is upwards or a density lower than water if the opening is downwards, and covers the opening by its weight or buoyancy when the pressure inside the distribution conduit is low and floats above or below the closure by liquid exiting the opening. In a preferred embodiment, the distribution conduit is made from an elastic material and the closable nozzles are slits in said elastic material. Such slits in an elastic material stay closed when the pressure inside the distribution conduit is low and open when the force of the pressure inside the distribution conduit exceeds the elastic force of the material. Distribution conduits with closable nozzles have the advantage of preventing dirt particles from entering the distribution conduit which may cause unwanted decomposition of hydrogen peroxide within the distribution conduit.

The hydraulic diameter of the liquid outlets, defined as four times the ratio of the cross section of an outlet to its circumference, is preferably less than 20 %, more preferably less than 10 % the hydraulic diameter of the distribution conduit, in order to have liquid exiting at all liquid outlets. The liquid outlets may all have the same size and shape. Alternatively, the size of the liquid outlets may increase along the distribution conduit, i.e. liquid outlets further away from the recirculation pump may have a larger size than liquid outlets closer to the recirculation pump in order to provide essentially the same liquid flow through all liquid outlets.

The at least one distribution conduit is submergible in the aquaculture pond at a height of from 5 to 50 cm above the bottom of the aquaculture pond, preferably at a height of from 10 to 40 cm above the bottom. Submerging the distribution conduit(s) at such a height may be provided by the distribution conduit(s) having a density higher than water and floating members attached to the distribution conduit(s) by hangers providing the desired distance. With this embodiment, the floating members will float on the surface of the aquaculture pond in which the device of the invention is installed and the distribution conduit(s) will be suspended below the floating members by the hangers at the desired height. In an alternative embodiment, submerging the distribution conduit(s) is provided by the distribution conduit(s) having a density lower than water and weights attached to the distribution conduit(s) by hangers providing the desired distance. With this embodiment, the weights attached to the distribution conduit(s) will sink to the bottom of the aquaculture pond in which the device of the invention is installed and the distribution conduit(s) will float at the desired height held by the hangers.

In a further alternative and preferred embodiment, the device of the invention further comprises supports attached to the distribution conduit(s). These supports are made from a material having a density of more than 1 g/cm³ and have a base for placing the support onto the bottom of the aquaculture pond with a distance of from 5 to 50 cm between the base and the attached distribution conduit. The supports may have any shape suitable for providing this function. In one embodiment, the support may be a brick or a slab of concrete with the distribution conduit placed on top, held by an attachment or by a grove on top of the brick or slab. In a further embodiment, the support may comprise a round, square or rectangular base plate with a spacer attached orthogonally to its center and an attachment member on the spacer at the required distance for attaching the distribution conduit. Alternatively, the support may have a triangular shape with an attachment member for attaching the distribution conduit connected to three separate legs of suitable length for placing the support onto the bottom of the aquaculture pond.

The support preferably comprises an attachment member for reversible attachment to the distribution conduit, preferably a clamp which engages with the distribution conduit. Most preferred are elastic clamps which snap onto the distribution conduit. Elastic clamps with the shape of a oval or circle section slightly larger than semicircular are particularly suitable attachment members for a tube shaped distribution conduit. The use of supports with an attachment member for reversible attachment to the distribution conduit allows quick assembly of the device of the invention at an emptied aquaculture pond and simple adaption of the distribution conduit(s) to the size and shape of the pond.

The attachment member may comprise a fixture which prevents sliding of the attachment member along the distribution conduit. This fixture may be a groove or rib on the attachment member engaging with a corresponding circumferential rib or groove on the distribution conduit. Alternatively, this fixture may be a clamp engaging with a section of a tubular distribution conduit which has an enlarged or reduced diameter or a non-circular cross-section, for example a square cross section. In a further alternative, this fixture may be a pin on the attachment member which penetrates into the wall of the distribution conduit with a length of the pin which is less than the wall thickness of the distribution conduit. Fixtures which prevent sliding of the attachment member along the distribution conduit are advantageous for submerging the distribution conduit(s) of the inventive device into an aquaculture pond already filled with water.

The attachment member preferably comprises a fixture which prevents rotation of the distribution conduit relative to the support. This fixture may be a groove or rib on the attachment member engaging with a corresponding rib or groove on the distribution conduit running parallel to the conduit. Alternatively, this fixture may be a clamp adapted in shape to engage with a distribution conduit or a section of a distribution conduit which has a non-circular cross-section, preferably an oval cross section. In a further alternative, this fixture may be a pin on the attachment member which penetrates into the wall of the distribution conduit with a length of the pin which is less than the wall thickness of the distribution conduit. Fixtures which prevent rotation of the distribution conduit relative to the attachment member are advantageous for keeping the liquid outlets of the distribution conduit at a defined position and controlling the direction into which the liquid outlets guide liquid exiting the distribution conduit.

In a preferred embodiment of the device of the invention the liquid outlets of the distribution conduit(s) are oriented to guide liquid exiting the distribution conduit at an angle of from 45 degrees to 180 degrees from the direction of gravity, preferably at an angle of from 90 degrees to 120 degrees, when the device is submerged in the aquaculture pond. Orifices which guide liquid at an angle different from 180 degrees may be placed only on one side of the distribution conduit(s) or may be placed on both sides of a distribution conduit. When orifices are placed on both sides of a distribution conduit, they may be arranged in pairs or alternatingly. A suitable orientation of the liquid outlets can be provided by using supports for the distribution conduit(s) which have attachment members for attaching the distribution conduit which prevents rotation of the distribution conduit relative to the support as described above. Attaching the distribution conduit to a support with the desired orientation of the liquid outlets may be achieved by a rib or groove on the distribution conduit running parallel to the conduit engaging with a corresponding groove or rib of the attachment member or by using a distribution conduit which has a non-circular cross-section, preferably an oval cross section, and an attachment member adapted to this cross-section. Alternatively or in addition the attachment of the distribution conduit to the support with the desired orientation of the liquid outlets may be aided by a suitable label on the distribution conduit, for example a colored line running along the top of the distribution conduit.

Arranging the distribution conduit(s) in the aquaculture pond at a fixed height of from 5 to 50 cm above the bottom allows to increase the concentration of dissolved oxygen near the bottom of the aquaculture pond by decomposition of hydrogen peroxide introduced through the liquid outlets of the device of the invention without irritating animals living at or close to the bottom of the pond by gas bubbles or strong liquid currents. Arranging the liquid outlets to guide liquid to exit the distribution conduit in an upward or essentially lateral direction, as described above, further prevents irritating animals living at or close to the bottom of the pond by liquid currents and prevents suspending sediment from the pond bottom.

The liquid outlets are preferably oriented to guide liquid exiting the distribution conduit in a circular flow pattern parallel to the bottom of the aquaculture pond. When a distribution conduit is arranged parallel to a side of the aquaculture pond, the liquid outlets are preferably oriented to guide liquid at an angle different from orthogonal to the direction of the distribution conduit in order to effect a clockwise or counter-clockwise flow pattern in the aquaculture pond. When distribution conduits are arranged orthogonal to a side of the aquaculture pond, the liquid outlets are preferably arranged to guide liquid at an angle of less than 180 degrees from the direction of gravity to the same side of the distribution conduit in order to effect a clockwise or counter-clockwise flow pattern in the aquaculture pond. Distribution conduits can be arranged orthogonal to a side of the aquaculture pond by connecting them to a central manifold or by connecting them to a connecting conduit which runs along the edges of the aquaculture pond. Arranging the liquid outlets to effect a circular flow pattern parallel to the bottom of the aquaculture pond provides for settling of suspended particles in the center of the aquaculture pond without a need for additional equipment, such as a paddle wheel, and facilitates removal of settling material from the pond, which may otherwise lead to enhanced oxygen consumption from degrading sediment.

The device of the invention comprises a hydrogen peroxide dosing unit connected to the recirculation conduit upstream of the distribution conduit. The hydrogen peroxide dosing unit is connected to the recirculation conduit by a hydrogen peroxide inlet. The hydrogen peroxide inlet may be either upstream of the recirculation pump, i.e. between the water intake and the recirculation pump, or preferably downstream of the recirculation pump, i.e. between the recirculation pump and the distribution conduit. The hydrogen peroxide dosing unit preferably comprises a hydrogen peroxide tank or more preferably a suction lance for withdrawing hydrogen peroxide from a hydrogen peroxide transport container, such as a canister or a drum. It preferably also comprises an additional hydrogen peroxide dosing pump. The hydrogen peroxide dosing unit preferably comprises a level sensor in the hydrogen peroxide tank or on the suction lance for withdrawing hydrogen peroxide which provides an alarm and preferably shuts off the hydrogen peroxide dosing pump when the hydrogen peroxide level in the hydrogen peroxide tank or transport container is low.

When the hydrogen peroxide inlet is upstream of the recirculation pump, the hydrogen peroxide dosing unit may comprise a regulating valve controlled by a flow meter measuring flow in a conduit between the hydrogen peroxide tank or the suction lance for withdrawing hydrogen peroxide and the hydrogen peroxide inlet. However, a dosing unit with a hydrogen peroxide dosing pump and a pressure retaining non-return valve at the hydrogen peroxide inlet is preferred in order to better prevent uncontrolled flow of hydrogen peroxide to the recirculation conduit.

When the hydrogen peroxide inlet is downstream of the recirculation pump, the hydrogen peroxide dosing unit preferably comprises a hydrogen peroxide dosing pump and a non-return valve at the hydrogen peroxide inlet in order to prevent water flow from the recirculation conduit to the hydrogen peroxide tank.

The hydrogen peroxide dosing pump is preferably a positive displacement pump and more preferably a membrane pump. Positive displacement pumps have the advantage of providing a constant and predictable flow of hydrogen peroxide without the need for measuring hydrogen peroxide flow. The hydrogen peroxide dosing pump and all valves between the hydrogen peroxide tank or the suction lance for withdrawing hydrogen peroxide and the hydrogen peroxide inlet should be constructed to comprise no locked in liquid volume and to provide pressure relief in case of a pressure rise caused by hydrogen peroxide decomposition within the pump, a valve or a conduit between the hydrogen peroxide tank and the hydrogen peroxide inlet.

The device of the invention preferably comprises a static mixer placed in the recirculation conduit downstream of the hydrogen peroxide inlet in order to provide a constant hydrogen peroxide concentration across the cross section of the recirculation conduit. A static mixer is preferably used when the hydrogen peroxide inlet is downstream of the recirculation pump and when a multitude of distribution conduits is connected to the recirculation conduit.

The device of the invention preferably comprises a flow meter measuring flow in the recirculation conduit and a controller controlling the hydrogen peroxide dosing pump based on the measured flow, preferably controlling the pump rate of the hydrogen peroxide dosing pump to be proportional to the flow in the recirculation conduit in order to provide an essentially constant hydrogen peroxide concentration in the recirculation conduit downstream from the hydrogen peroxide inlet. The controller is preferably additionally configured to shut off the hydrogen peroxide dosing pump if the flow measured in the recirculation conduit falls below a threshold value and/or if a pressure sensor in the recirculation conduit detects a pressure exceeding a safety threshold value.

The device of the invention may comprise a timer and a controller for operating the hydrogen peroxide dosing pump intermittently at preset intervals and for preset time periods. The timer may also control the recirculation pump to operate at the same time intervals, preferably with a preset lead time for establishing flow in the recirculation conduit and a preset lag time for flushing hydrogen peroxide from the recirculation conduit and the distribution conduit(s). Timed addition of hydrogen peroxide can provide oxygenation of an aquaculture pond without a need for carrying out measurements in the pond.

The device of the invention preferably comprises a sensor for dissolved oxygen, preferably measuring the concentration of dissolved oxygen, which can be placed in the aquaculture pond. The device may comprise a single sensor for dissolved oxygen or a multitude of sensors for dissolved oxygen. The sensor for dissolved oxygen is preferably configured to be placed near the bottom of the aquaculture pond at a distance to the distribution conduit(s). The device of the invention then also preferably comprises a controller which controls addition of hydrogen peroxide from the hydrogen peroxide dosing unit based on measuring a concentration of dissolved oxygen with the sensor for dissolved oxygen. The controller is preferably configured to start hydrogen peroxide dosing, either at a fixed rate or at a rate proportional to flow in the recirculation conduit, when the concentration of dissolved oxygen falls below a preset threshold value and to stop hydrogen peroxide dosing when the concentration of dissolved oxygen exceeds the preset threshold value. When the device comprises several sensors for dissolved oxygen, the controller is preferably configured to start hydrogen peroxide dosing when any of these sensors indicates a concentration of dissolved oxygen below the threshold value. The controller may also start and stop operation of the recirculation pump in the same manner, preferably with a preset lead time for establishing flow in the recirculation conduit and a preset lag time for flushing hydrogen peroxide from the recirculation conduit and the distribution conduit(s). Controlling hydrogen peroxide addition based on measuring the concentration of dissolved oxygen in the pond water prevents harm to the animal species raised in the pond caused by low contents of dissolved oxygen and allows to maintain sufficient oxygenation of the aquaculture pond at varying weather conditions and in the absence of a human operator, with minimum hydrogen peroxide consumption.

In a preferred embodiment, the device of the invention comprises a skid onto which the recirculation pump, a flow meter for measuring water flow between the recirculation pump and the distribution conduit(s), a controller for controlling the operating rate of the recirculation pump in order to maintain a constant water flow in the recirculation conduit and a controller for controlling addition of hydrogen peroxide from the hydrogen peroxide dosing unit based on measuring a concentration of dissolved oxygen with a sensor for dissolved oxygen are mounted. The hydrogen peroxide dosing unit may be mounted onto the same skid or may be provided as a separate rack or skid. Assembling these parts on a skid allows for assembling and testing the electrical and mechanically moving equipment of the inventive device in a workshop and for a quicker assembly and start-up of the inventive device at an aquaculture pond. Such a skid may also be used for oxygenating two ore more ponds using the same skid by connecting the recirculation conduit upstream of the recirculation pump through a switch valve with water intakes located in each of the ponds and connecting the recirculation conduit downstream from the recirculation pump and the hydrogen peroxide inlet through a corresponding switch valve with at least one distribution conduit located in each of the ponds, operating the switch valves to provide recirculation alternatively for one pond or the other.

The method of the invention for oxygenating an aquaculture pond comprises recirculating pond water with the inventive device for oxygenating an aquaculture pond described above, adding hydrogen peroxide from the hydrogen peroxide dosing unit. Recirculation of pond water may be carried out only when adding hydrogen peroxide, which can save on energy consumption, or may be carried out permanently in order to achieve additional benefits, such as improved transport of oxygen from the pond surface to the pond bottom and collecting settling particles at the pond center by a circular flow pattern, created by recirculating pond water with the inventive device, which facilitates removal of settling debris from the pond.

Hydrogen peroxide may be added continuously or intermittently and is preferably added in an amount providing a hydrogen peroxide concentration of from 5 to 100 mg/l, preferably 5 to 40 mg/l, in the liquid exiting the liquid outlets of the distribution conduit. Providing hydrogen peroxide at a concentration in this range prevents harm to the animal species raised in the pond by the hydrogen peroxide exiting the liquid outlets and at the same time prevents bacterial and algal growth in the distribution conduit(s) which otherwise could cause blocking of the liquid outlets.

Hydrogen peroxide is used as an aqueous solution, preferably having a hydrogen peroxide content of from 1 to 70 % by weight and more preferably of from 10 to 35 % by weight.

Intermittent addition of hydrogen peroxide may be at preset intervals and for preset periods of time. Suitable intervals and periods for intermittent hydrogen peroxide addition depend on temperature, daytime and population density in the pond and are preferably determined by monitoring levels of dissolved oxygen and the amounts of hydrogen peroxide needed for maintaining a concentration of dissolved oxygen of at least 4 mg/l, preferably at least 5 mg/l, over a period of several days.

In a preferred embodiment, a concentration of dissolved oxygen is measured in the pond water and hydrogen peroxide is added when the concentration of dissolved oxygen is less than 4 mg/l, preferably already when the concentration of dissolved oxygen is less than 5 mg/l. The concentration of dissolved oxygen is preferably measured at a distance to the distribution conduit(s), preferably at a distance of at least 10 cm from any liquid outlet of a distribution conduit. The concentration of dissolved oxygen is preferably measured near the bottom of the aquaculture pond, preferably at a distance of from 0 to 20 cm from the bottom of the pond, more preferably at a distance of from 0.5 to 10 cm above the bottom of the pond. This embodiment may be combined with intermittent addition of hydrogen peroxide at intervals of from 12 to 36 h and for periods of from 0.1 to 1 h during times when the concentration of dissolved oxygen is higher than the threshold value given above in order to prevent bacterial and algal growth in the distribution conduit(s).

In the method of the invention, the inventive device is preferably operated with an essentially constant flow rate in the water recirculation conduit and an essentially constant rate of hydrogen peroxide dosing at times when hydrogen peroxide is added.

### Example

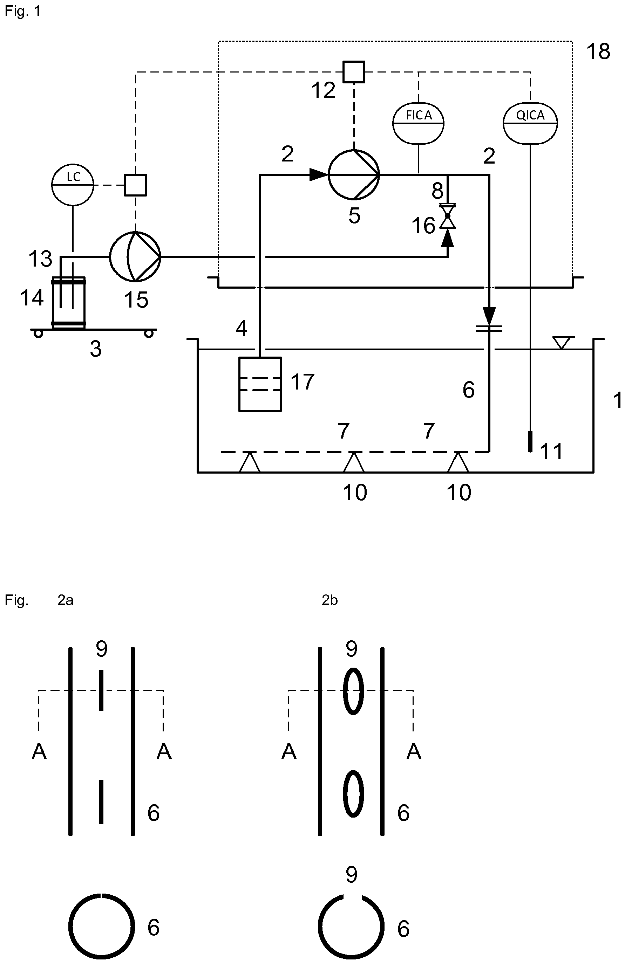

A preferred example of the device of the invention is shown in Fig. 1 and described below.

The inventive device comprises a water recirculation conduit (2) made from rigid polyvinylchloride tubing of 57 mm inner diameter, and a pump skid (18) with a cover protecting the installed equipment from rain and direct sunlight, located near an aquaculture pond (1). A self-priming variable speed centrifugal pump with a capacity of 18 m³/h, mounted to the skid (18), is used as the recirculation pump (5). The section of the recirculation conduit (2) upstream of the recirculation pump (5) is connected to a water intake (4) with a filter (17) located near the surface of the aquaculture pond (1). The section of the recirculation conduit (2) downstream of the recirculation pump (5) is connected to a flexible polyvinylchloride hose of 40 mm inner diameter, serving as distribution conduit (6), through a coupling located at the pond edge. The polyvinylchloride hose has a length of up to 50 m and is plugged at the end. The submerged section of the tube has holes of 2 mm diameter drilled horizontally into the tube on both sides of the tube at intervals of 20 cm to provide liquid outlets (7) and is submerged in the aquaculture pond (1) on supports at a height of about 30 cm above the pond bottom. The device further comprises a turbine flow meter and a hydrogen peroxide inlet (8) with a pressure retaining non-return valve (16) set at 2.5 bar, both mounted to the skid (18), the turbine flow meter being connected to the recirculation conduit (2) downstream from the recirculation pump (5) and the hydrogen peroxide inlet (8) being connected to the recirculation conduit (2) downstream from the flowmeter. The device also comprises a JUMO ecoLine O-DO sensor (11) for dissolved oxygen placed in the aquaculture pond (1) and a controller (12) mounted to the skid and connected to the sensor (11) for dissolved oxygen, which starts up the recirculation pump (5) when the concentration of dissolved oxygen is less than 5 mg/l and stops the recirculation pump (5) when the concentration of dissolved oxygen is more than 6 mg/l.

The device further comprises a hydrogen peroxide dosing unit (3) in the form of a mobile rack which contains a membrane dosing pump (15) with a capacity of 30 l/h, a canister holder, a suction lance (13) fitting 30 I hydrogen peroxide transport canisters (14) connected to the suction side of the membrane dosing pump (15), and a hydrogen peroxide dosing controller connected to the controller (12) that is mounted to the skid. The pressure side of the membrane dosing pump is connected to the hydrogen peroxide inlet (8) by a PTFE hose having 4 mm inner diameter. The suction lance (13) has two level contact sensor, a first sensor for setting an alarm for low hydrogen peroxide level and a second sensor for shutting off the membrane dosing pump. The hydrogen peroxide dosing controller starts up the membrane dosing pump (15) after the recirculation pump (5) has been started by the controller (12) and stops the membrane dosing pump (15) before the recirculation pump (5) is stopped by the controller (12). The hydrogen peroxide dosing controller also stops the membrane dosing pump (15) when the second sensor of the suction lance (13) signals a low level of hydrogen peroxide. Controller (12) also monitors the flow in the recirculation conduit (2) by the measurement of the turbine flow meter and triggers the hydrogen peroxide dosing controller to shut off the membrane dosing pump (15) when the flow falls below a preset threshold value.

Fig. 2a and 2b show a preferred embodiment of a distribution conduit (6) made from an elastic material where the liquid outlets (7) are closable nozzles (9) provided by slits in the elastic material. Fig. 2a shows a top view of a section of distribution conduit (6) and a cross section along line A-A of the distribution conduit (6) where the pressure inside the distribution conduit (6) is the same or lower than the pressure of the water surrounding the distribution conduit (6) and the slits are closed, providing a closed nozzle (9). Fig. 2b shows the corresponding top view and cross section where the pressure inside the distribution conduit (6) is higher than the pressure of the water surrounding the distribution conduit (6) and the slits are open, providing an open nozzle (9).

### List of reference signs:

- 1: aquaculture pond
- 2: recirculation conduit
- 3: hydrogen peroxide dosing unit
- 4: water intake
- 5: recirculation pump
- 6: distribution conduit
- 7: liquid outlets
- 8: hydrogen peroxide inlet
- 9: closable nozzles
- 10: supports
- 11: sensor for dissolved oxygen
- 12: controller
- 13: suction lance
- 14: hydrogen peroxide transport container
- 15: hydrogen peroxide dosing pump
- 16: non-return valve
- 17: strainer
- 18: pump skid

## Claims

1. A device for oxygenating an aquaculture pond (1), comprising a water recirculation conduit (2) and a hydrogen peroxide dosing unit (3) connected to the recirculation conduit (2), wherein the recirculation conduit (2) comprises a water intake (4) for withdrawing water from the pond (1), a recirculation pump (5) downstream of said water intake (4) and at least one distribution conduit (6) having a multitude of liquid outlets (7), arranged downstream of said recirculation pump (5) and submergible in the aquaculture pond (1) at a height of from 5 to 50 cm above the bottom of the aquaculture pond (1), the hydrogen peroxide dosing unit (3) being connected to the recirculation conduit (2) upstream of said distribution conduit (6) by a hydrogen peroxide inlet (8).

2. The device of claim 1, wherein the liquid outlets (7) comprise closable nozzles (9) which are in a closed state when the pressure inside the distribution conduit (6) is the same or lower than the pressure of a medium surrounding the distribution conduit (6) and change to an open state at a pressure inside the distribution conduit (6) higher than the pressure of the medium surrounding the distribution conduit (6).

3. The device of claim 2, wherein the distribution conduit (6) is made from an elastic material and the closable nozzles (9) are slits in said elastic material.

4. The device of any one of claims 1 to 3, further comprising supports (10) attached to the distribution conduit (6), wherein the supports (10) are made from a material having a density of more than 1 g/cm³ and have a base for placing the support (10) onto the bottom of the aquaculture pond (1) with a distance of from 5 to 50 cm between the base and the attached distribution conduit (6).

5. The device of any one of claims 1 to 4, wherein the liquid outlets (7) are oriented to guide liquid exiting the distribution conduit (6) at an angle of from 45 degrees to 180 degrees from the direction of gravity, preferably at an angle of from 90 degrees to 120 degrees, when said device is submerged in the aquaculture pond (1).

6. The device of any one claim 5, wherein the liquid outlets (7) are oriented to guide liquid exiting the distribution conduit (6) in a circular flow pattern parallel to the bottom of the aquaculture pond (1).

7. The device of any one of claims 1 to 6, additionally comprising a sensor (11) for dissolved oxygen.

8. The device of claim 7, additionally comprising a controller (12) which controls addition of hydrogen peroxide from the hydrogen peroxide dosing unit (3) based on measuring a concentration of dissolved oxygen with the sensor (11) for dissolved oxygen.

9. The device of any one of claims 1 to 8, wherein the hydrogen peroxide dosing unit (3) comprises a hydrogen peroxide tank or a suction lance (13) for withdrawing hydrogen peroxide from a hydrogen peroxide transport container (14), and a hydrogen peroxide dosing pump (15).

10. The device of one of claims 1 to 9, wherein the hydrogen peroxide inlet (8) is downstream of the recirculation pump (5).

11. The device of any one of claims 1 to 10, wherein the hydrogen peroxide inlet (8) comprises a non-return valve (16).

12. The device of any one of claims 1 to 11, wherein a static mixer is placed in the recirculation conduit (2) downstream of the hydrogen peroxide inlet (8).

13. The device of any one of claims 1 to 12, wherein the water intake (4) comprises a strainer (17).

14. A method for oxygenating an aquaculture pond (1), comprising recirculating pond water with a device for oxygenating an aquaculture pond according to any one of claims 1 to 13, adding hydrogen peroxide from the hydrogen peroxide dosing unit (3).

15. The method of claim 14, wherein hydrogen peroxide is added continuously or intermittently in an amount providing a hydrogen peroxide concentration of from 5 to 100 mg/l in the liquid exiting the liquid outlets (7) of the distribution conduit (6).

16. The method of claim 14 or 15, wherein a concentration of dissolved oxygen is measured in the pond water and hydrogen peroxide is added when the concentration of dissolved oxygen is less than 5 mg/l.
